(19) Europäisches Patentamt
European Patent Office
Office européen des brevets

(11) EP 1 480 373 A1

# (12) EUROPEAN PATENT APPLICATION

(43) Date of publication:
24.11.2004 Bulletin 2004/48

(51) Int Cl.7: **H04L 9/08**, H04L 9/32

(21) Application number: 04102203.9

(22) Date of filing: 18.05.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 20.05.2003 KR 2003032085

(71) Applicant: **SAMSUNG ELECTRONICS CO., LTD.**
**Suwon-City, Kyungki-do (KR)**

(72) Inventors:
- **Choi, Yang-lim**
  **#112-2403 Sunkyung APT, Kkahi maeul**
  **Gyeonggi-do (KR)**
- **Kim, Myung-sun #DA-106 Woosung 4-cha APT**
  **Gyeonggi-do (KR)**
- **Ang, Yong-jin J.**
  **Gyeonggi-do (KR)**
- **You, Yong-kuk**
  **Suwon-si, Gyeonggi-do (KR)**
- **Nam, Su-hyun**
  **Seocho-gu, Seoul (KR)**

(74) Representative: **Read, Matthew Charles et al**
**Venner Shipley LLP**
**20 Little Britain**
**London EC1A 7DH (GB)**

## (54) User authentication in content distribution system

(57) A system for authenticating a content user that guarantees the anonymity of the user's identity, comprising a group common key that authenticates a user, a private key owned by the user, a trusted organization adapted to create and distribute the group common key, and to store personal information on the authenticated user and a temporary registration certificate issued to the authenticated user. A user apparatus converts the temporary registration certificate by means of a predetermined conversion method using the private key, and further provides the converted temporary registration certificate to a content provider prior to executing content provided by the content provider. the content provider adapted to check whether the user has been authenticated by the trusted organization, using the group common key prior to providing the content.

FIG. 3

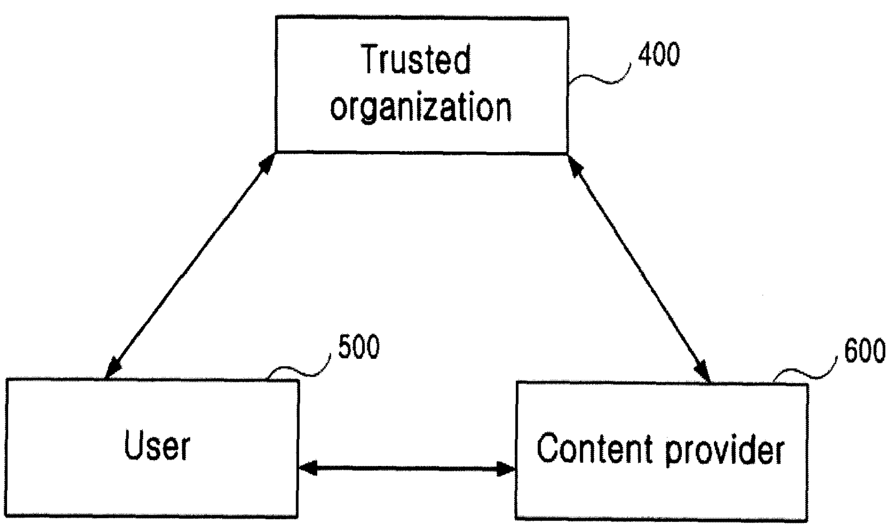


EP 1 480 373 A1

## Description

The present invention relates to user authentication.

Techniques for providing content to clients across a network can be roughly classified into two types. The first technique does not guarantee confidentiality of the identity of the content requester, as shown in Figure 1. In this case, the home networks of users $u_i$ and a content provider (CP) constitute the system. The second technique, an anonymizer in order to guarantee confidentiality of the identities of content users, as shown in Figure 2. In this case, an anonymizer server is interposed between the CP and the content users $u_i$. The anonymizer prevents extraction of information on the identities of the content users $u_i$ from the data in the requests from the content users $u_i$.

In the case illustrated in Figure 1, the identities of the users are not in an encrypted format and are thus revealed as part of any transaction. Data, related to the transactions between the content provider and the content users, can be processed so that the data can be kept secret by using an appropriate encryption method. Any conventional encryption technique or a public key-based encryption technique can be used.

In the system shown in Figure 2, since all communication between the users and the content provider pass through the anonymizer, it is possible to guarantee the anonymity of content users.

None of the conventional techniques discussed herein guarantee anonymity of a user's identity. While some techniques attempt to achieve this, they have a limitation in that security is not guaranteed in view of the fact that encryption and data provided to the outside are merely modified. Even in the case of the technique described in relation to Figure 2, using the anonymizer, if data is obtained between the user and the anonymizer, the user's identity can be easily found out in the same manner as Figure 1.

There is provided a system for authenticating a content user, comprising a group common key that authenticates a user, a private key owned by the user, a trusted organization adapted to create and distribute the group common key, and to store personal information on the authenticated user and a temporary registration certificate issued to the authenticated user. A user apparatus converts the temporary registration certificate by means of a predetermined conversion method using the private key, and further provides the converted temporary registration certificate to a content provider prior to executing content provided by the content provider. The content provider is adapted to check whether the user has been authenticated by the trusted organization, using the group common key prior to providing the content.

Another aspect of the disclosed teachings is a method of authenticating a content user, comprising creating and distributing a group common key by a trusted organization. Authentication of a user with the trusted organization is performed using the group common key. Personal information on the user authenticated by the trusted organization is stored and a temporary registration certificate is issued to the authenticated user. The temporary registration certificate issued from the trusted organization is converted by means of a predetermined conversion method using a user's own private key. The temporary registration certificate is provided to a content provider. A check is performed to see whether the user who has provided the converted temporary registration certificate has been authenticated. Content is provided depending on the check results.

An embodiment of the present invention will now be described, by way of example, with reference to Figures 3 to 12 of the accompanying drawings, in which:

Figure 1 illustrates a conventional technique for providing content;

Figure 2 illustrates another conventional technique for providing content;

Figure 3 is a block diagram showing the constituent elements of an exemplary authentication system according to the present invention;

Figure 4 is a block diagram showing the elements of a trusted organization-side apparatus according to the present invention;

Figure 5 is a block diagram showing the elements of a content user-side apparatus according to the present invention;

Figure 6 is a block diagram showing the elements of a non-limiting exemplary content provider-side apparatus;

Figure 7 is a flowchart illustrating an exemplary implementation of the present invention;

Figure 8 is a flowchart illustrating an example of a technique for creating a key by a trusted organization;

Figure 9 is a flowchart illustrating an example of a technique for performing registration with the trusted organization by a user;

Figure 10 is a flowchart illustrating an example of a technique for authenticating a user by a content provider;

Figure 11 is a flowchart illustrating an example of a technique for creating content by the content provider; and

Figure 12 is a flowchart illustrating an example of a technique for confirming a user's identity by the content provider.

Referring to Figure 3, the example authentication system is implemented by interactions between a trusted organization 400, a content user 500 and a content provider 600. The trusted organization 400 creates group common keys for used by groups of content users 500. It also generates, initializes and opens system parameters to the public. These parameters will be used all over the system. It also stores user IDs (personal information) in a database and searches for a user's ID on the basis of information extracted from content by agreement with the content provider 600. Knowledge of user information may be necessary for the purpose of tracking an unauthorized user or charging fees. Each user 500 creates a public-private key pair by agreement with the trusted organization 400. The user then receives a registration certificate that will be used for a subsequent protocol. Finally, the user is authenticated by the content provider 600 on the basis of the registration certificate so that the user can receive and use content. When the user 500 is demonstrating that they are a legitimate user of a relevant group, the content provider 600 verifies the user's demonstration. Furthermore, the content provider 600 creates content, adds encrypted user information to the created content and then provides the resultant content to the relevant user 500. Moreover, the content provider 600 can identify a user by obtaining encrypted user information from the trusted organization 400.

Referring to Figure 4, the trusted organization-side apparatus 400 comprises a transceiver unit 450, a parameter-generating unit 410, an authentication unit 420, a database 440 and a control unit 430.

In operation, the transceiver unit 450 receives a value of "t", a user ID and a value of *"$a^x$",* sent by the user 500. It then transmits a random number "β", generated by the parameter-generating unit 410, to the user 500. The parameter-generating unit 410 generates a value of "n" that is the basis for computation of a mod value. It also generates exponent values "y" and "z" that are used for exponential computation. In addition, a value of another prime number "v" and arbitrary random numbers and are generated. The generated values of "n, v, a, y, z" that are system parameters which will be open to the public.

The authentication unit 420 extracts user information (user ID) from content items by agreement with the content provider 600. User IDs are obtained from a registrant table of the database, using values of "R" and "z". The database stores various exponents, random numbers and parameters generated from the parameter-generating unit 410. It also stores user IDs received from users. The values of "R" that correspond to temporary registration certificates for users are registered in the database. Furthermore, the control unit 430 controls the transceiver unit 450, the parameter-generating unit 410, the authentication unit 420 and the database 440 and performs various related mathematical operations.

Referring to Figure 5, the user-side apparatus 500 comprises a transceiver unit 510, a content-executing unit 520, an encryption unit 540, a memory 550 and a control unit 530. The transceiver unit 510 transmits a value "t", calculated from a random number "α", a user ID and a value $a^x$ to the trusted organization. It receives a random number "β" from the trusted organization and transmits $T_1$, $T_2$, and a value, calculated by an ElGamal signature scheme, to the content provider 600. It then receives a content item including encrypted user information from the content provider.

The content-executing unit 520 assists the user authentication process of the content provider 600 for a content item received from the content provider 600 and executes the relevant content. The encryption unit 540 generates a random number "r", and is in charge of the calculation of $T_1$, $T_2$ and calculations related to the ElGamal signature scheme. The memory 550 functions to temporarily store parameters provided to and received from the trusted organization 400 and the content provider 600. The control unit 530 controls the operation of the transceiver unit 510, the content-executing unit 520, the encryption unit 540 and the memory 550, and performs various mathematical related operations.

Referring to Figure 6, the content provider-side apparatus 600 comprises a transceiver unit 620, a content-creating unit 650, an authentication unit 640, a database 610 and a control unit 630. The transceiver unit 620 receives $T_1$, $T_2$ and the value calculated by the ElGamal signature scheme from the user 500, and transmit a content item, including encrypted user information to the user 500. The content-creating unit 650 creates a variety of original content items and generates content items including new, encrypted user information from the original content items by means of secure two-party computation. The authentication unit 640 performs calculations using the ElGamal signature scheme using a value $W_1$. It then checks, using such computation, whether a user is a legitimate user who has a value of "R" registered with the trusted organization. It also checks whether a user is a legitimate user who knows a random number "r" by again performing the computation using the ElGamal signature scheme, if the user again accesses the system.

The database 610 stores parameters provided to and received from the trusted organization 400 and the user 500. It also stores the original content items and the content items with the encrypted user information added thereto. The control unit 630 controls the operation of the transceiver unit 620, the content-creating unit 650, the authentication unit 640 and the database 610, and performs various related mathematical operations.

Referring to Figure 7, an exemplary implementation comprises six steps and is implemented by interactions of the trusted organization, the content provider and the content user. First, the trusted organization creates a key (S710). As part of this key creation, the trusted organization creates a group common key to be used by a group of content users. It further creates and publishes system parameters, which will be used all over the system.

Second, the user registers with the trusted organization (S720). The user creates a temporary public-private key pair by agreement with the trusted organization. The user receives a registration certificate that will be used in subsequent processes.

The registration certificate is conceptually similar to a membership card that demonstrates a type of membership.

Third, the content provided authenticates the user (S730). The user shows the content provider that user is a legitimate user of the relevant group. The content provider then verifies the user's demonstration of their legitimacy.

Fourth, the content provider creates content and adds encrypted user information to the content (S740). During this step S740, new content to be provided to an authenticated user is generated by performing the secure two-party computation using information on the content's provider and the content user.

Fifth, the content provider transmits the content to the user (S750). In step S750, the content provider provides the content to the relevant user.

Sixth, the content provider checks a user's identity by obtaining the encrypted user information from the trusted organization (S760). Step S760 is performed when a user's identity is required to be checked for the purpose of detecting or tracking an unauthorized user or charging fees.

Referring to Figure 8, in example of a technique for creating a key by a trusted organization, n = pq is first obtained by selecting very large prime numbers "p" and "q", as in a RSA (Rivest-Shamir-Adleman) scheme, (S810). Such a selection makes it difficult to discover the values of "p" and "q" from the value of "n" that is a result of multiplication of the large prime numbers. All mod computation is hereinafter performed on the basis of the value of "n". Then, exponents "y" and "z", that will be used for exponential computation, are selected and stored. Then, another prime number "v" is selected (S820). The exponents "y" and "z" as well as "v" should preferably be prime numbers. Then, an arbitrary random number "a" is selected, and $Y = a^{-y}$ and $Z = a^x$ are calculated (S830). The value of "$Y = a^{-y}$" opens the values of "n, v, a, Y, Z." These can be defined as system parameters that are part of the parameters finally obtained in the foregoing process, to the content provider and the user (S840).

Referring to Figure 9, an example of a technique for performing registration in the trusted organization by a user involves a process between the user and the trusted organization. The user selects a random number "α", computes $t \equiv a^{\alpha}$, and then transmits the value of $t \equiv a^{\alpha}$ together with a user ID to the trusted organization (S910). The formula $t \equiv a^{\alpha}$ means that a mod value of $a^{\alpha}$ is obtained and the mod value is designated as "t". Thereafter, the trusted organization selects a random number " β" and transmits it to the user (S920). The user calculates $x = \alpha \cdot \beta$ using the received "β", then calculates $a^x$, and transmits it to the trusted organization (S930). The trusted organization examines $t^{\beta} = a^x$ using the received $a^x$ (S940), i.e. whether a mod value of $t^{\beta}$ is identical with a mod value of $a^x$. If so, the trusted organization recognizes the user as a legitimate user, calculates $R = a^{(x+y) \cdot v-1}$ , that is a temporary registration certificate for the user, and transmits it to the user (S950).

Last, the trusted organization stores the user ID received from the user and the calculated value of "R" in its own database (S960).

Referring to Figure 10, an example of a technique for authenticating the user by a content provider involves a process between the content provider and the user. The user selects a random number "r" (S1010), calculates $T_1 \equiv R \cdot a^r$, calculates ElGamal("auth", $a^{x+rv}$), using the ElGamal signature scheme, and then transmits the two values (S1020). The ElGamal signature scheme or signature checking scheme is already well known to those skilled in the art and more detailed information is available in a paper titled "A public key cryptosystem and a signature scheme based on discrete logarithms" (IEEE Tran. on Information Theory, pp. 469-472, 1985) by T. ElGamal. The term "auth" represents authentication or signature. It is expressed as a function name in the present disclosure.

The content provider first performs ElGamal ("auth", $W_1$) by means of the ElGamal signature checking scheme by calculating $W_1 \equiv T^v{}_1 \cdot Y$. By this process, the content provider checks whether the user is a legitimate user who has a registered value of "R" (S1030). Thereafter, if the legitimate user calculates $T_2 \equiv R^{-1} \cdot Z^r \cdot a^{-r}$ again and transmits ElGamal("kwg", $a^{zr}$) (S1040), the content provider calculates $W_2 \equiv T_1 \cdot T_2$ and checks a signature using ElGamal("kwg", $W_2$, Z) (S1050). Such a process is a process of checking whether the user who transmitted $T_2$ is the same as the user who transmitted $T_1$, i.e. whether the user who has transmitted $T_2$ knows the random number "r". The "kwg" means "knowledge" and represents confirmation of a signature that has already been subjected to the authentication process.

Referring to Figure 11, in an example of a technique for creating content by the content provider, the values of $T_1$ and $T_2$ corresponding to the user, $S_j$, representing the value of an arbitrary j-th transaction of the content provider, and a public key of the content provider are input into a function for executing the secure two-party computation (S1110). Here, the transaction value $S_j$ represents a unique transaction number that identifies a particular transaction where the use of content by a user is viewed as one transaction. The public key of the content provider means a provider's unique number for representing a provider that has provided a relevant content. Then, a value output from the function is added to an original content item (S1120) to create a new content item that is in turn transmitted to the user (S1130, S1140).

Referring to Figure 12, an example of a technique for the confirmation a user's identity by the content provider involves a process performed between the content provided and the trusted organization. User information is extracted from a relevant content item by agreement between the content provider and the trusted organization for the purpose of detecting and tracking an unauthorized user or charging fees (S1210, S1220). Then, $T_1^{z-1} \cdot T_2^{-1} \equiv R^z$ is calculated on the basis of the extracted user information (S1230). The trusted organization obtains a user ID using values of "R" and "z" from the registrant table stored in the database (S1240). If the user is the same, the mod value of $T_1^{z-1} \cdot T_2^{-1}$ is identical with the mod value of $R^z$. Thus, the trusted organization can recognize the identity of a content user by using the value of "R", previously registered by the user, and the value of "z' selected by the trusted organization itself.

The content may be a resource accessible using http. The content provider transceiver unit may be a web server. The content may be fundamentally static, i.e. the only modification of the content for transmission is that required by the present invention or for compression.

The user apparatus may be some form of computer, e.g. a PC, a PDA or a smartphone, with a web browser or the like for requesting resources from web servers.

## Claims

**1.** A system for authenticating a content user, comprising:

a group common key;
a private key owned by the user;
a trusted organization adapted to create and distribute the group common key, authenticating a user and to store personal information on the authenticated user and a temporary registration certificate issued to the authenticated user;
a user apparatus adapted to convert the temporary registration certificate using a conversion method using the private key, and further adapted to provide the converted temporary registration certificate to a content provider prior to executing content provided by the content provider; and
the content provider adapted to check whether the user has been authenticated by the trusted organization, using the group common key prior to providing the content.

**2.** The system of claim 1, wherein the trusted organization comprises:

a parameter-generating unit adapted to generate the group common key;
a first authentication unit adapted to authenticate the user;
a database adapted to store personal information on the authenticated user and the temporary registration certificate; and
a first transceiver unit adapted to transmit the group common key and receive an authentication request from the user.

**3.** The system of claim 2, wherein the content provider comprises:

a second transceiver unit adapted to receive the group common key and the converted temporary registration certificate, and transmit content to the authenticated user;
a second authentication unit adapted to check whether the user who has provided the converted temporary registration certificate has been authenticated by the trusted organization, using the group common key; and
a content-creating unit adapted to provide the content depending on the check results.

**4.** The system of claim 3, wherein the user apparatus comprises:

an encryption unit adapted to request the trusted organization to authenticate a user and convert the temporary registration certificate using the private key;
a content-executing unit adapted to execute the content; and
a transceiver unit adapted to receive the temporary registration and transmit the converted temporary registration certificate to the content provider.

**5.** The system of claim 4, wherein the encryption unit converts the temporary registration using a first conversion method and a second conversion method, using the private key.

**6.** The system of claim 5, wherein the second authentication checks whether the user who has provided the temporary registration certificate converted by the first conversion method has been authenticated by the trusted organization, using the group common key, and

further checks whether the user who has provided the temporary registration certificate converted by the first conversion method knows the private key, using the temporary registration certificates converted by the first and second conversion methods.

**7.** The system of claim 6, wherein the content-creating unit encrypts content by using the temporary registration certificates converted by the first and second conversion methods and the public key, and provides the encrypted content.

**8.** The system of claim 7, wherein the content provider provides the temporary registration certificates converted by the first and second conversion methods to the trusted organization, and the trusted organization searches for the personal information on the user registered in the database of the trusted organization by using the temporary registration certificates converted by the first and second conversion methods and the group common key.

**9.** A method of authenticating a content user, comprising:

creating and distributing a group common key by a trusted organization;
performing authentication of the trusted organization using the group common key;
storing personal information on the user authenticated by the trusted organization and a temporary registration certificate issued to the authenticated user;
converting the temporary registration certificate issued from the trusted organization by means of a predetermined conversion method using a user's own private key;
providing the converted temporary registration certificate to a content provider; and
checking whether the user who has provided the converted temporary registration certificate has been authenticated; and
providing content depending on the check results.

**10.** The method of claim 9, wherein converting is performed using a sub-process comprising:

(a) converting the temporary registration certificate issued from the trusted organization by means of a first conversion method using the user's private key and providing a first converted temporary registration certificate to the content provider; and
(b) converting the temporary registration certificate issued from the trusted organization by means of a second conversion method using the user's private key and providing a second converted temporary registration certificated t to the content provider.

**11.** The method of claim 10, wherein checking is performed using a process comprising:

(c) checking whether the user who has provided the first temporary registration certificate has been authenticated by the trusted organization, using the group common key; and
(d) checking whether the user who has provided the first temporary registration certificate knows the private key, using the temporary registration certificates converted by the first and second conversion methods.

**12.** The method of claim 11, further comprising:

encrypting the content using the first and second temporary registration certificates and a public key of the content provider, and providing the encrypted content to the user.

**13.** The method of claim 12, further comprising:

providing the first and second temporary registration certificates to the trusted organization, and searching for the personal information on the user registered in the trusted organization using the first and second temporary registration certificates and the group common key.

**14.** The method of claim 13, wherein the group common key is prime numbers "p" and "q" that are selected according to a RSA (Rivest-Shamir-Adleman) scheme, "n" obtained through multiplication of the prime numbers "p" and "q", and " $Y = a^{-y}$" and " $Z = a^{z}$" that are obtained through calculation by applying exponents "y" and "z" to a predetermined random number " $a$ ".

**15.** The method of claim 14, wherein authentication is performed using a sub-process comprising:

selecting a predetermined random number "$\alpha$", calculating $t \equiv a^{\alpha}$, and transmitting the calculated value and personal information on the user to the trusted organization;
selecting a predetermined random number "$\beta$", and transmitting it to the user;
calculating " $x = \alpha \cdot \beta$ " using the received "$\beta$", calculating $a^{x}$; and
calculating "$t^{\beta} \equiv a^{x}$" using $a^{x}$, and authenticating the user depending on the calculation results.

**16.** The method of claim 15, wherein the temporary registration certificate is $R = a^{(x+y) \cdot v-1}$.

**17.** The method of claim 16, wherein:

step (a) comprises selecting the user's own private key "r", calculating the temporary registration certificate $T_1 \equiv R \cdot a^{r}$ converted by the first conversion method, calculating ElGamal ("auth", $a^{x+rv}$) using an ElGamal signature scheme, and transmitting the computed value and $T_1$ to the content provider, and

step (b) comprises calculating the temporary registration certificate $T_2 \equiv R^{-1} \cdot Z^r \cdot a^{-r}$ converted by the first conversion method, calculating ElGamal("kwg", $a^{zr}$), and transmitting the calculated value and $T_2$ to the content provider.

**18.** The method of claim 17, wherein:

step (c) comprises checking whether the user is an authenticated user who has a temporary registration certificate "R" registered in the trusted organization by calculating $W_1 \equiv T_1^{\nu} \cdot Y$ and ElGamal("auth", $W_1$), and

step (d) comprises checking whether the user who has transmitted the temporary registration certificate $T_2$ converted by the second conversion method knows the private key "r" by calculating $W_2 = T_1 \cdot T_2$ and ElGamal("kwg", $W_2$ , $Z$).

**19.** The method of claim 18, wherein the temporary registration certificate is converted by calculating $T_1^{z-1} \cdot T_2^{-1} \equiv R^z$.

**FIG. 1**

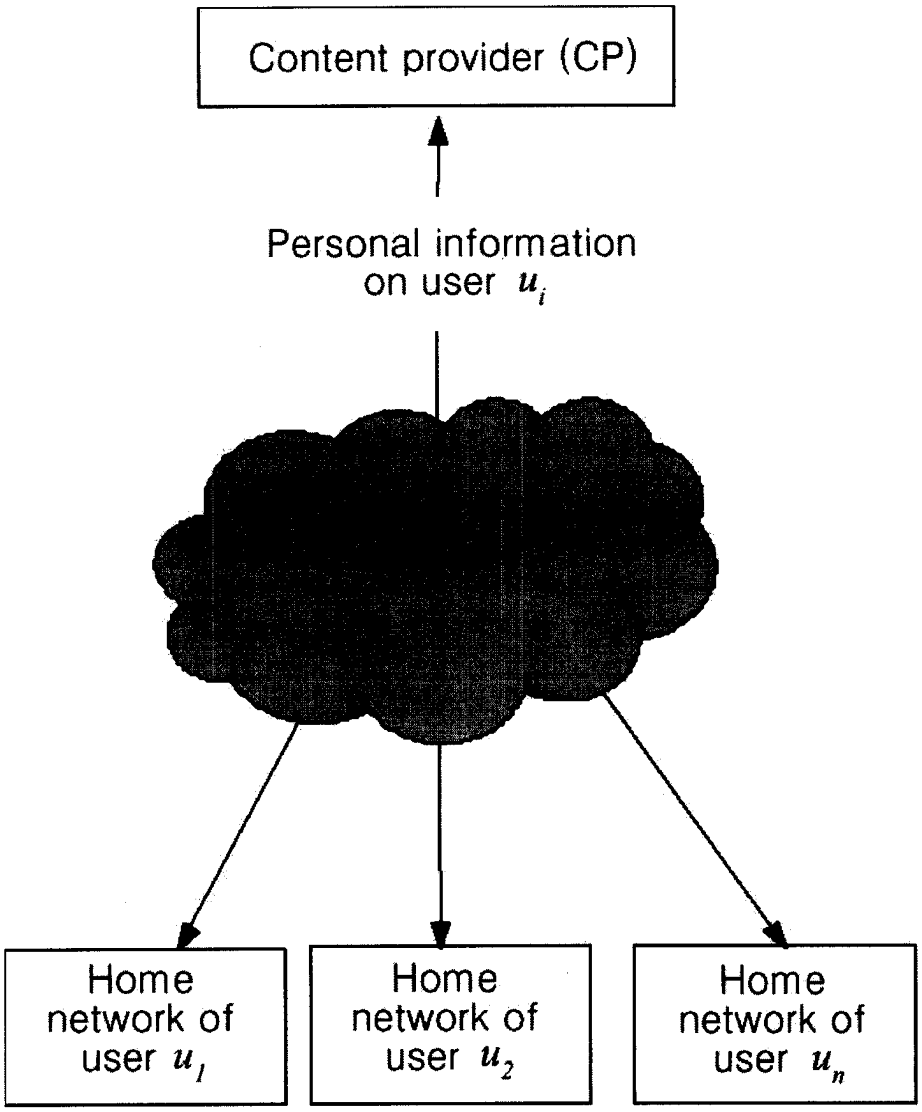
Content provider (CP)
Personal information on user $u_i$
Home network of user $u_1$
Home network of user $u_2$
Home network of user $u_n$

FIG. 2

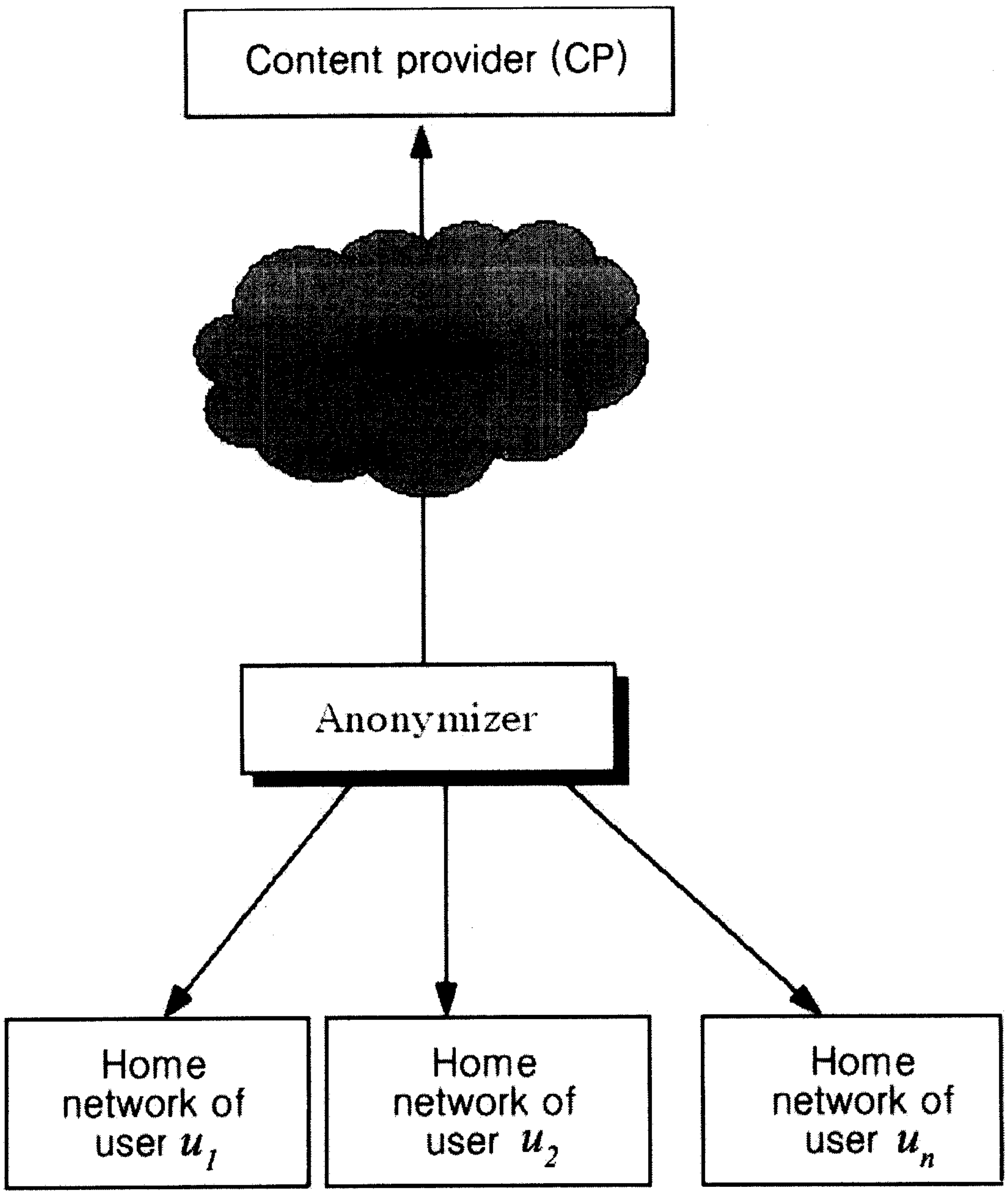
Content provider (CP)
Anonymizer
Home network of user $u_1$
Home network of user $u_2$
Home network of user $u_n$

FIG. 3

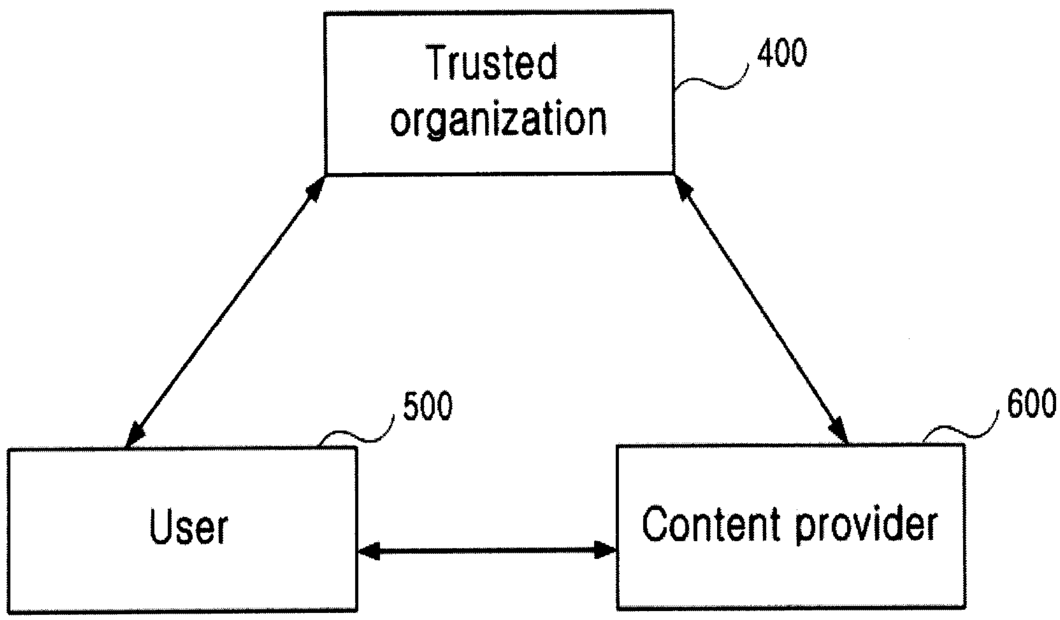

FIG. 4

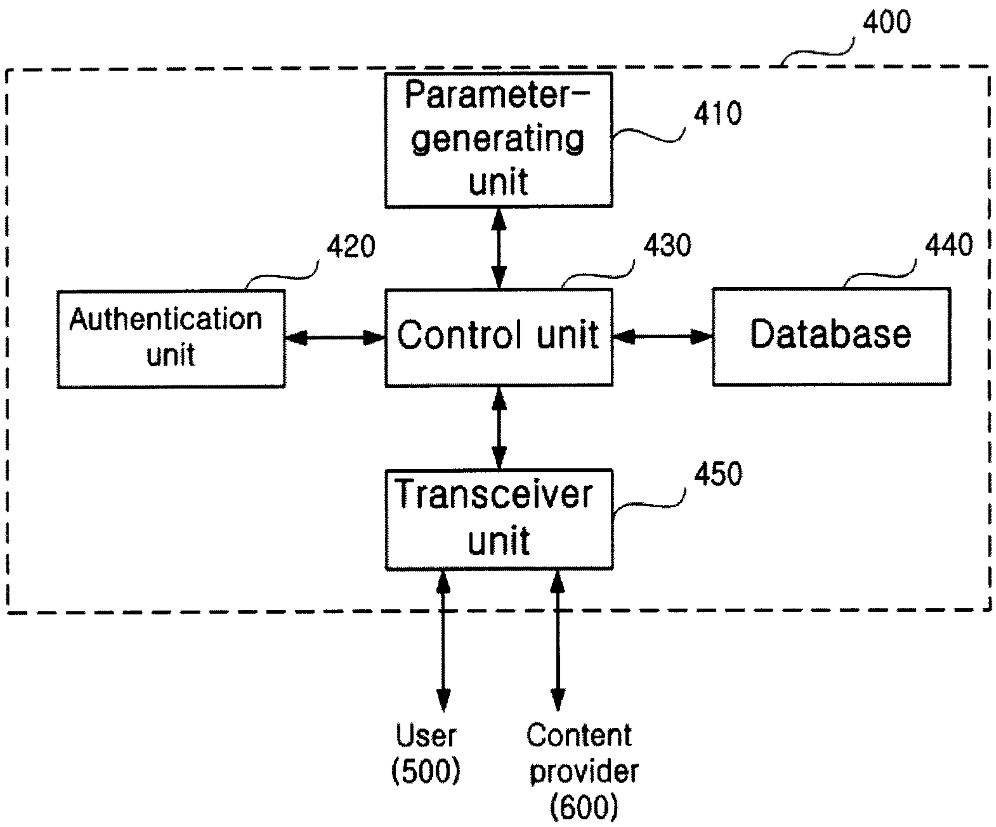
400
Parameter-generating unit
410
420
430
440
Authentication unit
Control unit
Database
Transceiver unit
450
User (500)
Content provider (600)

FIG. 5

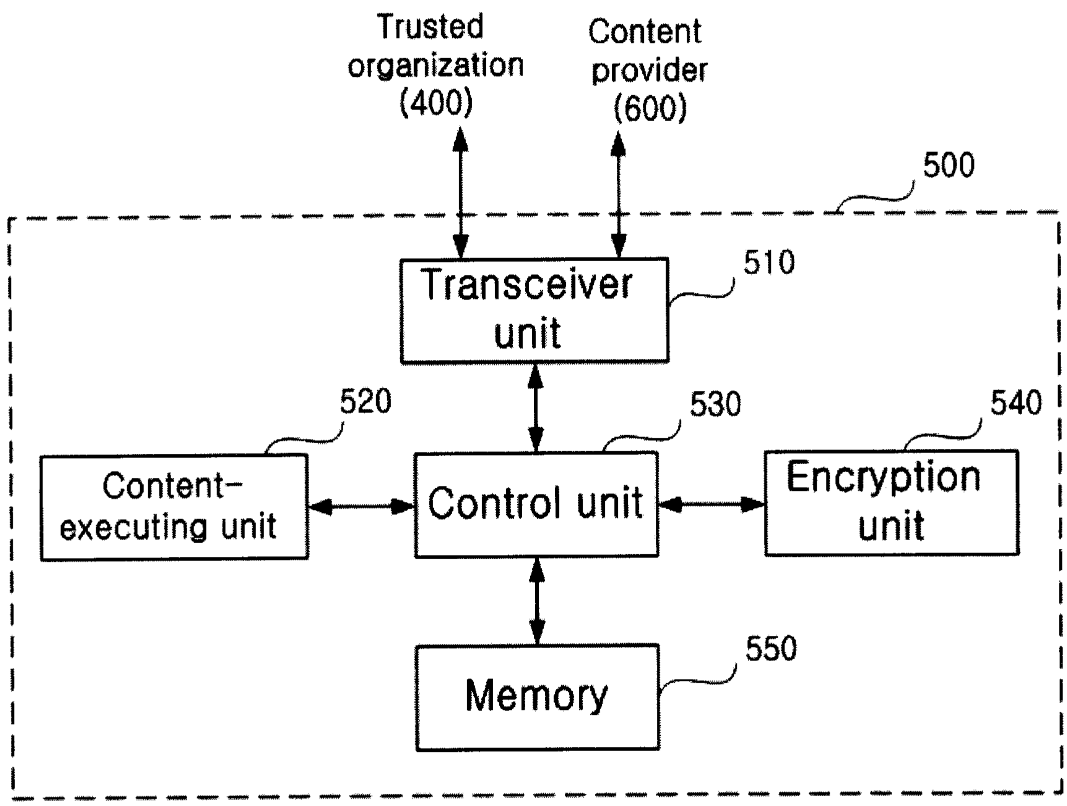
Trusted organization (400)
Content provider (600)
500
Transceiver unit
510
520
530
540
Content-executing unit
Control unit
Encryption unit
Memory
550

FIG. 6

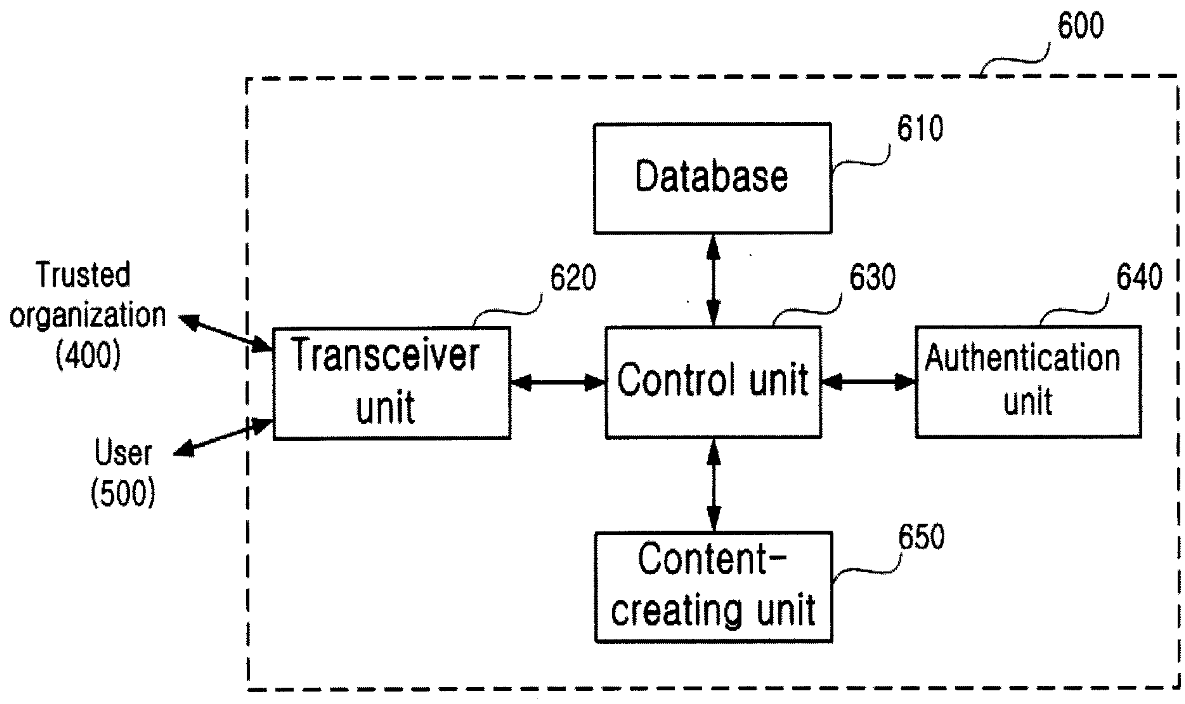
600
Database
610
Trusted organization (400)
620
630
640
Transceiver unit
Control unit
Authentication unit
User (500)
Content-creating unit
650

FIG. 7

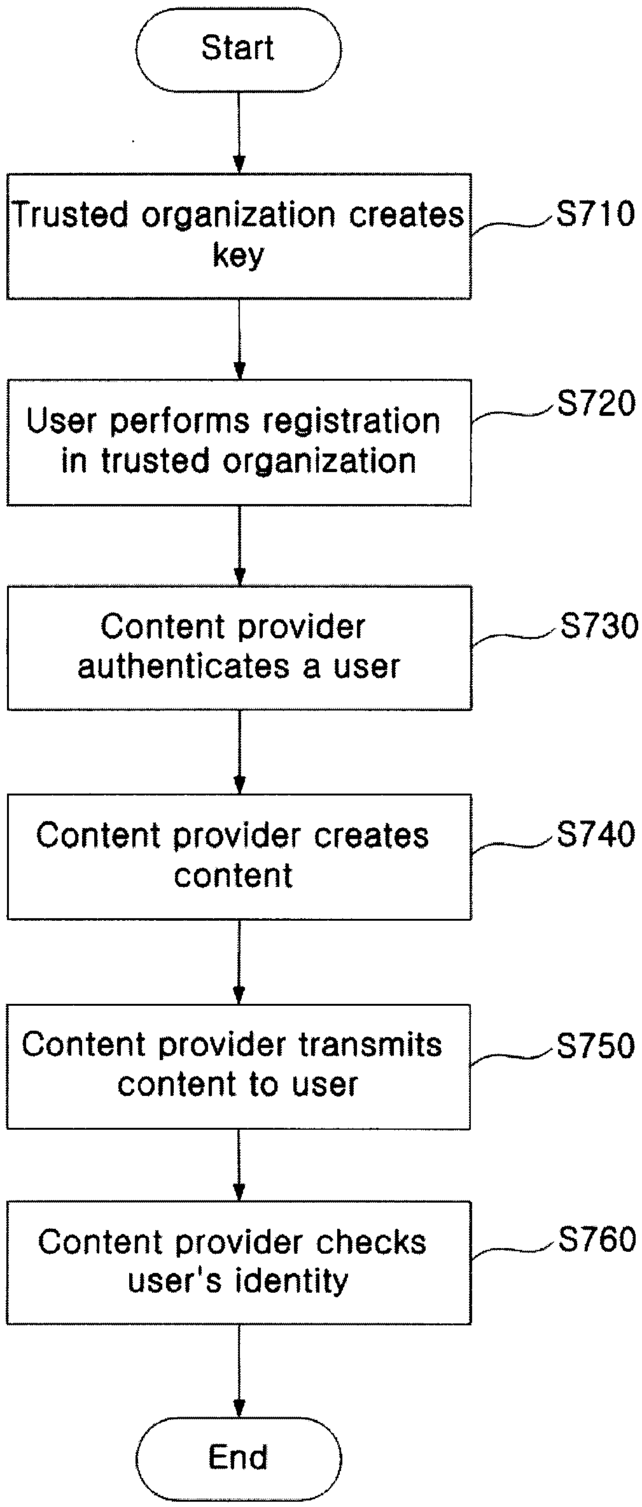
Start
Trusted organization creates key
S710
User performs registration in trusted organization
S720
Content provider authenticates a user
S730
Content provider creates content
S740
Content provider transmits content to user
S750
Content provider checks user's identity
S760
End

FIG. 8

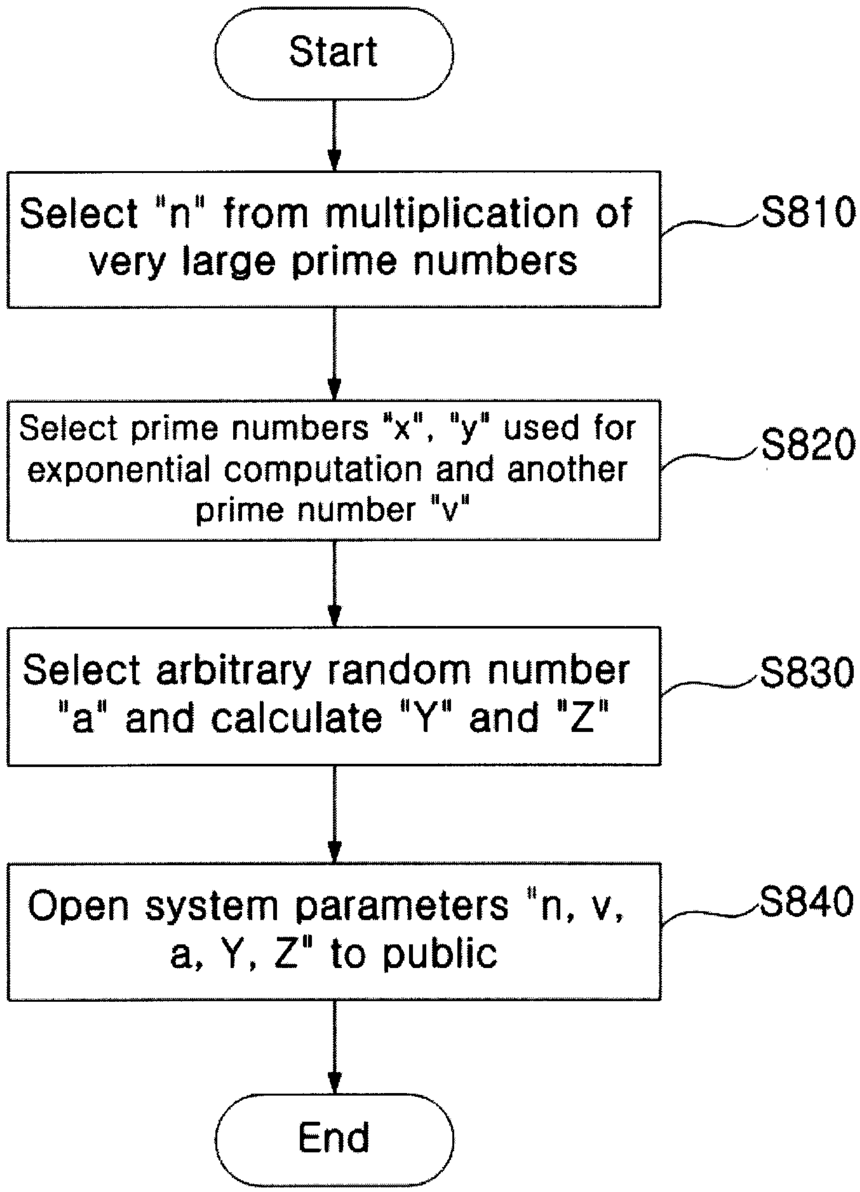
Start
Select "n" from multiplication of very large prime numbers
S810
Select prime numbers "x", "y" used for exponential computation and another prime number "v"
S820
Select arbitrary random number "a" and calculate "Y" and "Z"
S830
Open system parameters "n, v, a, Y, Z" to public
S840
End

FIG. 9

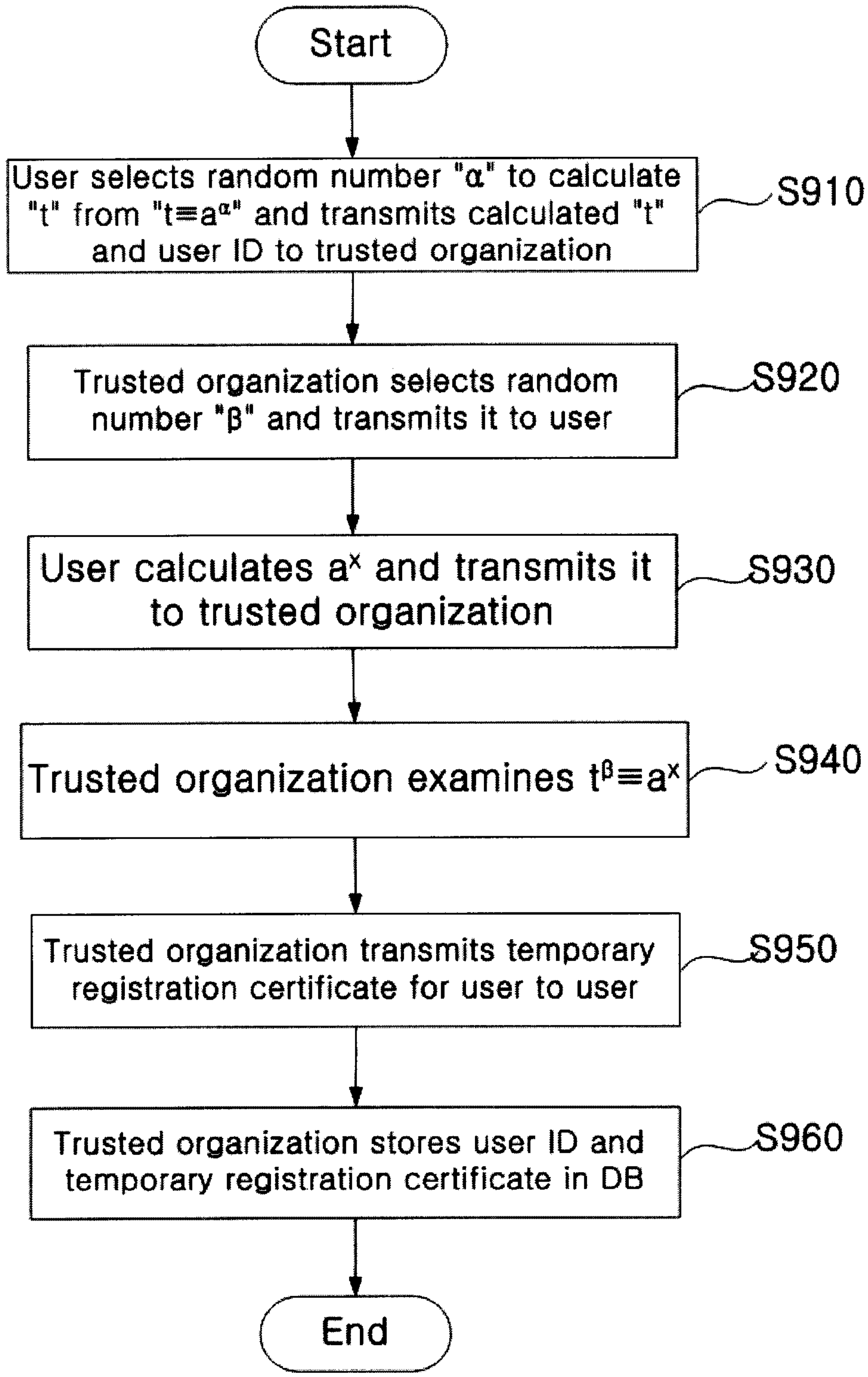
Start
User selects random number "α" to calculate "t" from "t≡a^α" and transmits calculated "t" and user ID to trusted organization
S910
Trusted organization selects random number "β" and transmits it to user
S920
User calculates a^x and transmits it to trusted organization
S930
Trusted organization examines t^β≡a^x
S940
Trusted organization transmits temporary registration certificate for user to user
S950
Trusted organization stores user ID and temporary registration certificate in DB
S960
End

FIG. 10

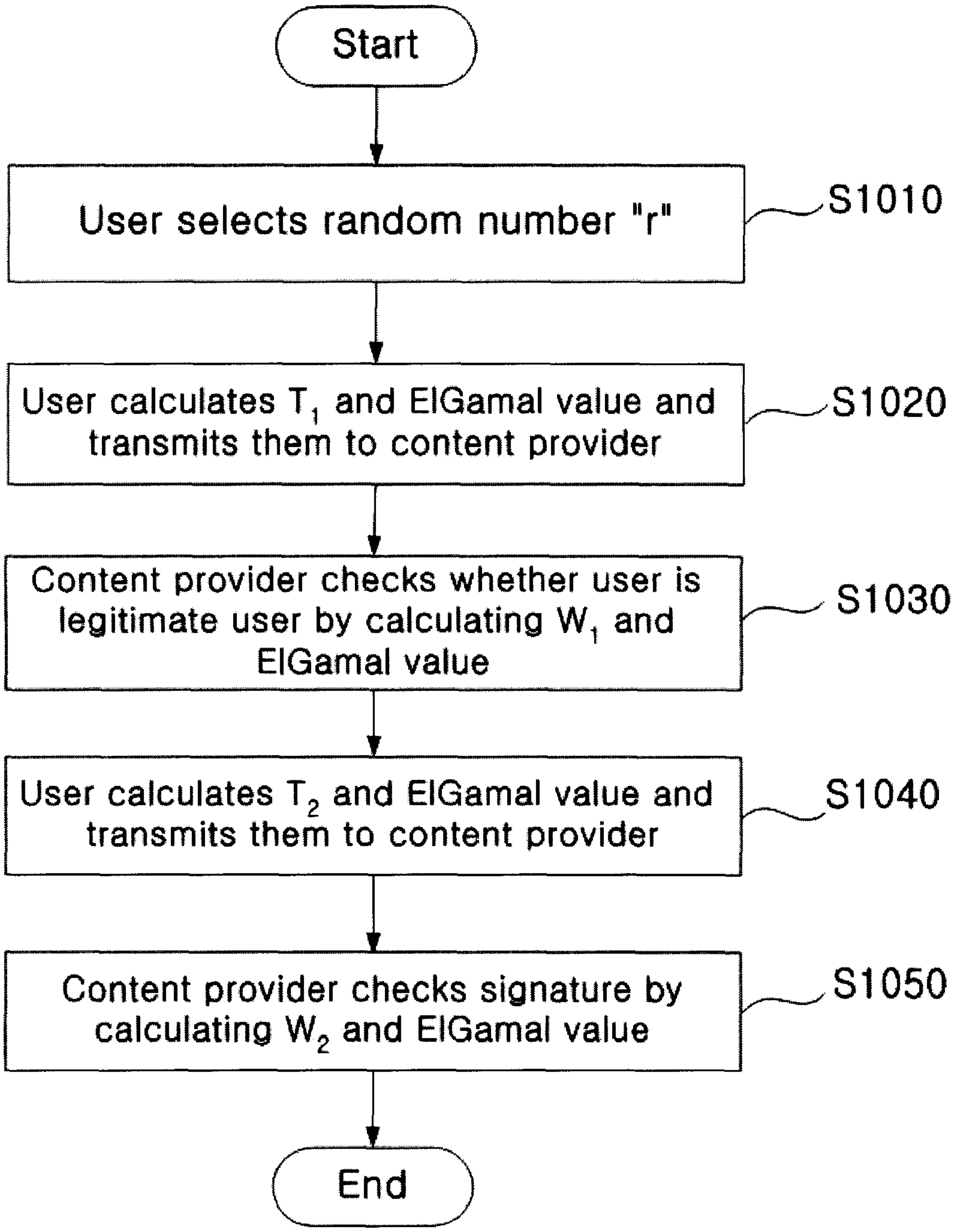
Start
User selects random number "r"
S1010
User calculates $T_1$ and ElGamal value and transmits them to content provider
S1020
Content provider checks whether user is legitimate user by calculating $W_1$ and ElGamal value
S1030
User calculates $T_2$ and ElGamal value and transmits them to content provider
S1040
Content provider checks signature by calculating $W_2$ and ElGamal value
S1050
End

FIG. 11

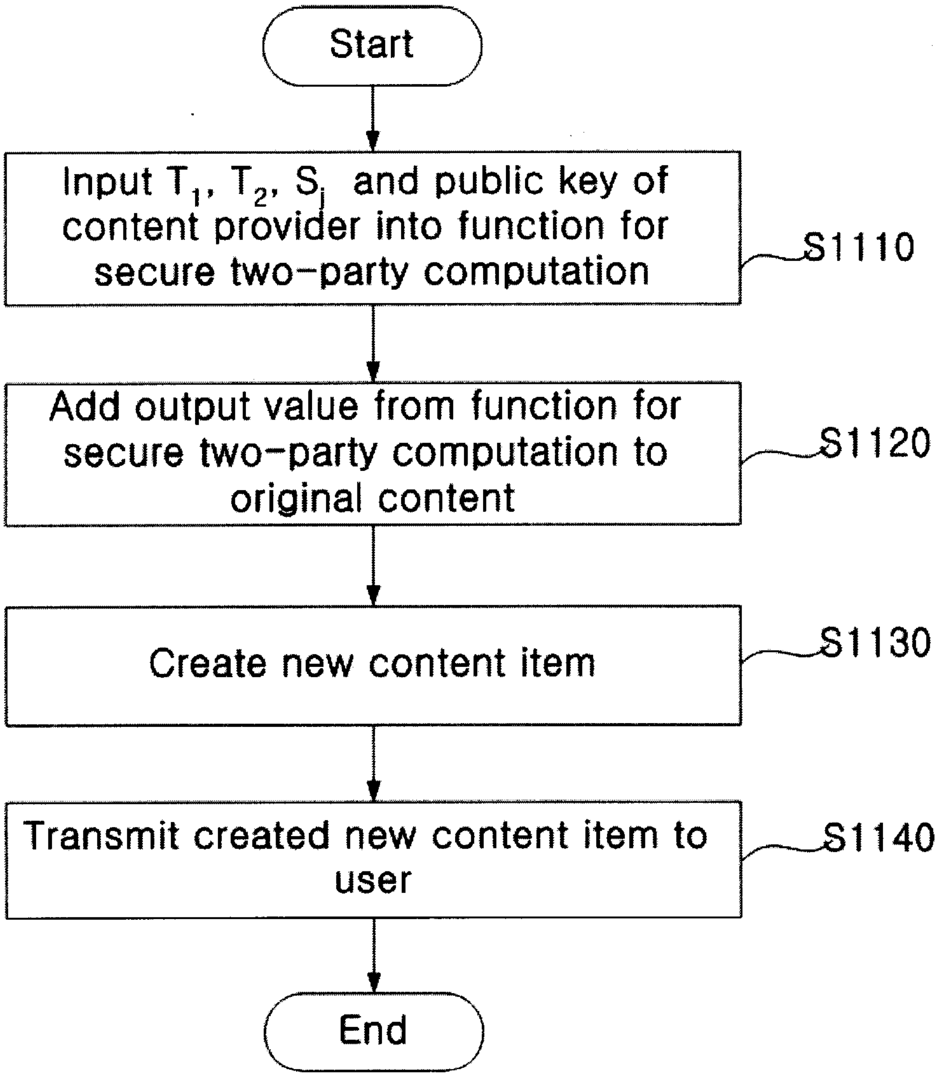
Start
Input $T_1$, $T_2$, $S_j$ and public key of content provider into function for secure two-party computation
S1110
Add output value from function for secure two-party computation to original content
S1120
Create new content item
S1130
Transmit created new content item to user
S1140
End

FIG. 12

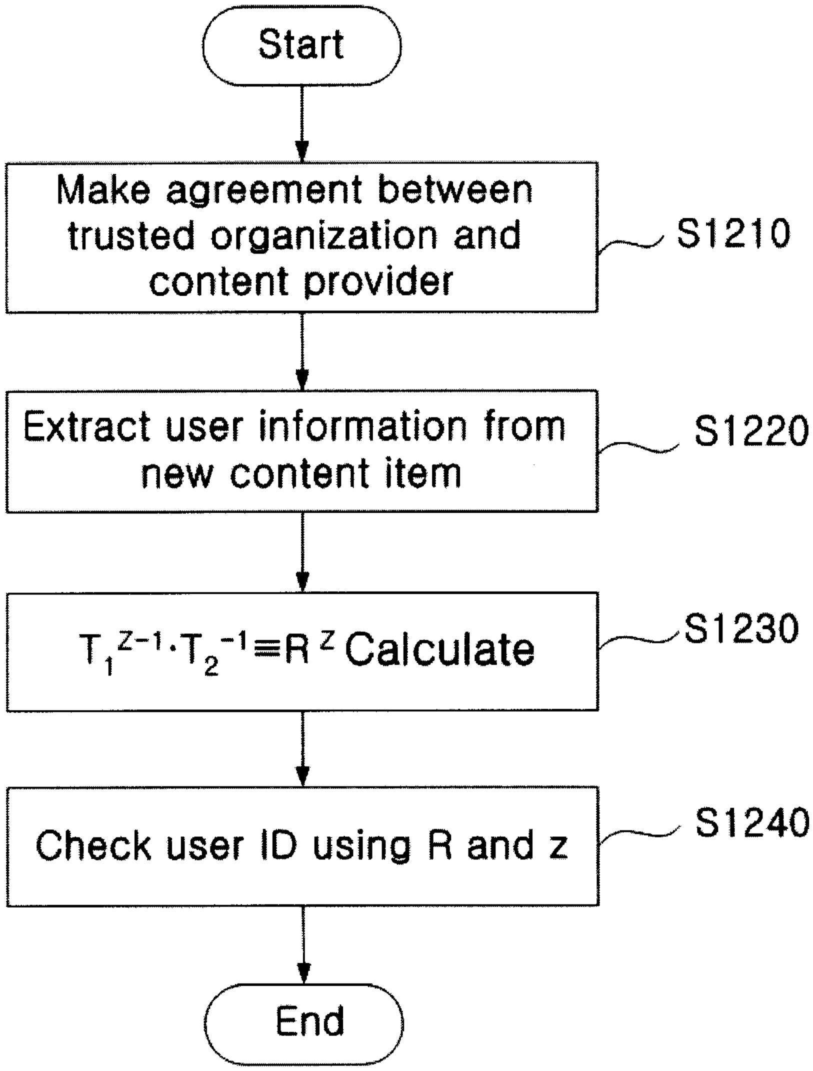
Start
Make agreement between trusted organization and content provider
S1210
Extract user information from new content item
S1220
$T_1^{Z-1} \cdot T_2^{-1} \equiv R^Z$ Calculate
S1230
Check user ID using R and z
S1240
End

European Patent Office

# EUROPEAN SEARCH REPORT

Application Number
EP 04 10 2203

| Category | DOCUMENTS CONSIDERED TO BE RELEVANT<br>Citation of document with indication, where appropriate, of relevant passages | Relevant to claim | CLASSIFICATION OF THE APPLICATION (Int.Cl.7) |
|---|---|---|---|
| X | CAMENISCH J ; LYSYANSKAYA A: "An efficient system for non-transferable anonymous credentials with optional anonymity revocation"<br>ADVANCES IN CRYPTOLOGY - EUROCRYPT 2001. INTERNATIONAL CONFERENCE ON THE THEORY AND APPLICATION OF CRYPTOGRAPHIC TECHNIQUES. PROCEEDINGS. SPRINGER-VERLAG, LECTURE NOTES IN COMPUTER SCIENCE VOL.2045, 10 May 2001 (2001-05-10), pages 93-118, XP002291611<br>INNSBRUCK, AUSTRIA<br>ISBN: 3-540-42070-3<br>* abstract *<br>* page 94 - page 96 *<br>* page 100, paragraph 4 - page 104 *<br>* page 113 *<br>* page 116, paragraph 7.3 *<br>----- | 1-15 | H04L9/08<br>H04L9/32 |
| A | CHEN L: "ACCESS WITH PSEUDONYMS"<br>CRYPTOGRAPHY: POLICY AND ALGORITHMS. INTERNATIONAL CONFERENCE, XX, XX, 3 July 1995 (1995-07-03), pages 232-243, XP001097325<br>* page 232 - page 234 *<br>* page 237 - page 240 *<br>----- | 1-19 | TECHNICAL FIELDS SEARCHED (Int.Cl.7)<br>H04L |
| A | CHAUM D: "SECURITY WITHOUT IDENTIFICATION: TRANSACTION SYSTEMS TO MAKE BIG BROTHER OBSOLETE"<br>COMMUNICATIONS OF THE ASSOCIATION FOR COMPUTING MACHINERY. NEW YORK, US, vol. 28, no. 10, 1 October 1985 (1985-10-01), pages 1030-1044, XP002000086<br>ISSN: 0001-0782<br>* page 1039, right-hand column - page 1042 *<br>----- | 1-19 | |

The present search report has been drawn up for all claims

| Place of search | Date of completion of the search | Examiner |
|---|---|---|
| Berlin | 6 August 2004 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)